# EUROPEAN PATENT SPECIFICATION

(11) **EP 1 774 211 B1**
(45) Date of publication and mention of the grant of the patent: **30.09.2009**
(21) Application number: 05759528.2
(22) Date of filing: 07.06.2005
(51) Int. Cl.: F16K 31/163, F16K 31/165

(54) **COLLETS FOR USE WITH PROCESS CONTROL DEVICES**
KLEMMBUCHSEN FÜR DEN EINSATZ MIT VERFAHRENSSTEUERUNGSVORRICHTUNGEN
BAGUES UTILISEES AVEC DES DISPOSITIFS DE COMMANDE DE PROCESSUS

(30) Priority: 14.06.2004 US 867324
(43) Date of publication of application: 18.04.2007
(73) Proprietor: FISHER CONTROLS INTERNATIONAL LLC, St. Louis, MO 63136 (US)
(72) Inventor: ENGLE, Chad, M., Marshalltown, IA 50158 (US); OLBERDING, Jason, Gene, Marshalltown, IA 50158 (US); GETHMANN, Douglas, Paul, Gladbrook, IA 50635 (US)
(74) Representative: Bohnenberger, Johannes
(86) International application number: PCT/US2005/019974
(87) International publication number: WO 2005/124211

(56) References cited:
- DE-A1- 3 827 428
- DE-A1- 3 927 396
- GB-A- 2 327 463
- US-A- 5 975 106
- US-B1- 6 666 129

## Description

### FIELD OF THE DISCLOSURE

The present disclosure relates generally to process control devices and, more particularly, to collets for coupling rotary actuators to process control devices.

### BACKGROUND

Fluid process systems typically use valves such as, for example, rotary valves to control temperature, pressure, and other parameters associated with a fluid control process. Rotary valves typically have a valve stem or shaft that is mechanically coupled to an actuator. In operation, the actuator may rotate the valve shaft to cause a valve element (e.g., a disc) to move between an open position that permits the passage of fluid through the valve and a closed position that substantially prevents the passage of fluid through the valve. Rotary valves are typically installed in-line with a pipe so that as the valve element (e.g., a disc) moves (i.e., opens/closes), the flow of fluid through the valve and, thus, through the pipe may be varied (e.g., in a throttling control operation or an on/off operation).

As is known, actuators are typically coupled to a shaft of a valve to operate the valve between an open position and a closed position and may be implemented using electric, pneumatic, and/or hydraulic device(s). To facilitate the compatibility of process control valves with a variety of actuators, many available process control valves have shafts that are compliant with well-known standards. For example, the International Standards Organization (ISO) has developed a standard for square shafts that specifies shaft size, shaft dimensions, and shaft extension. Adherence to the ISO standard ensures that actuators and valves made by multiple manufacturers can be interchangeably coupled to each other without requiring modification of the actuators or valves. In particular, the valve shaft specification or ISO standard is particularly advantageous when purchasing off-the-shelf actuators.
One such collet is known from the document US 6 666 129.

Many off-the-shelf actuators provide shaft receptacles having a square bore that comply with the ISO standard. The square bore is typically manufactured using a broaching technique, in which a thick saw-like cutting tool having a plurality of teeth is driven through a solid shaft or receptacle. In this manner, material is removed in a precise manner to form a bore dimensioned to receive a square valve shaft. However, broaching is an undesirable technique due to the precision or tolerances required to provide properly dimensioned bores (i.e., bores that are not too large or too small). In many instances, to ensure that the dimensions of the shaft receptacle are compliant with the ISO standard, the inner dimensions of the shaft receptacle are made substantially larger than the outer dimensions of a valve shaft.

For most on/off applications, the inner dimensions of the shaft receptacle may be significantly larger than the outer dimensions of the valve shaft without compromising operation. However, for throttling applications, in which the position of a valve element (e.g., a disc) is varied (e.g., modulated about a control point) between a fully closed and a fully open position, oversized shaft receptacles are not suitable. An oversized shaft receptacle typically results in a loose mechanical coupling and, thus, lost motion between the shaft receptacle and the shaft of the process control device.

Lost motion may be generally defined as the difference in angular rotation between a shaft receptacle and a shaft and is typically a result of a loose coupling between the shaft receptacle and the shaft. For example, if a loose coupling is made between a shaft receptacle and a substantially square shaft, the angular rotation of the shaft receptacle may be different from the rotational displacement of the shaft.

In general, lost motion may lead to inaccurate positioning of the valve disc and poor control over the fluid flowing through the valve. Lost motion is often reduced by driving wedges or affixing shaft keys between the actuator receptacle and the shaft of the process control device. However, additional components such as wedges and shaft keys are difficult to field install and, once installed, may be difficult to remove, thereby complicating subsequent repair or replacement of process control devices coupled in this manner.

### SUMMARY

Example collets disclosed herein may be used with process control devices to engage substantially square or rectangular shafts. In accordance with one example, a collet may include at least one flexible member having a first surface and a second surface. The first surface is configured to engage a rectangular shaft and the second surface is configured to engage a third surface of a substantially rectangular bore. The flexible member is coupled to a first end of an elongated member and configured to be displaced toward an axis of the elongated member by the third surface. Additionally, the elongated member is configured to be coupled to at least a portion of a process control device actuator.

In accordance with another example, a collet may include a plurality of flexible members configured to be coupled to an elongated member. Each of the flexible members may have an inner surface that forms at least a portion of a substantially rectangular bore configured to receive a substantially square or rectangular shaft. Additionally, the flexible members form an outer surface for engaging a surface of a bore having a plurality of alignment grooves. The surface of the bore is configured to cause the flexible members to be displaced toward an axis of the elongated member to cause the inner surface of each of the flexible members to engage one or more surfaces of the substantially square or rectangular shaft.

In accordance with yet another example, a collet may be configured to engage a sleeve having a passage extending therethrough and a substantially square or rectangular bore coaxial with the passage and extending at least partially along the passage. In particular, the collet may include a first end configured to extend into the passage and a second end configured to engage with the substantially square or rectangular bore. The second end includes a plurality of flexible members having a tapered outer surface and a substantially rectangular inner surface. The tapered outer surface may define a substantially rectangular outer surface for engaging the substantially rectangular bore. The substantially rectangular inner surface may be configured to engage the rectangular shaft. The flexible members are configured to reduce the length of a substantially rectangular perimeter defined by the substantially rectangular inner surface as the tapered outer surface engages the substantially square or rectangular bore.

In accordance with yet another example, a collet may include a plurality of flexible members integrally formed with an elongated member. The flexible members may form a substantially rectangular first bore and a first outer surface. The first bore includes a plurality of inner surfaces. The collet may be configured to engage a sleeve having a second outer surface and a second bore configured to receive the flexible members. The flexible members are configured to slide within the second bore and a surface of the second bore is configured to engage the first outer surface of the flexible members to cause the inner surfaces to engage a shaft associated with a process control device.

### BRIEF DESCRIPTION OF THE DRAWINGS

FIG. 1 depicts an example valve assembly.

FIGS. 2A and 2B are isometric views of the actuator of FIG. 1.

FIGS. 3A and 3B are isometric views of the lever and the example collet of FIGS. 2A and 2B.

FIGS. 4A through 4E are more detailed isometric views depicting the example collet of FIGS. 1 through 3B.

FIGS. 5A through 5E are isometric views depicting another example collet.

FIGS. 6A through 6F are isometric views depicting yet another example collet.

FIG. 7 is an isometric view of another example collet.

FIG. 8 is an isometric view of yet another example collet.

### DETAILED DESCRIPTION

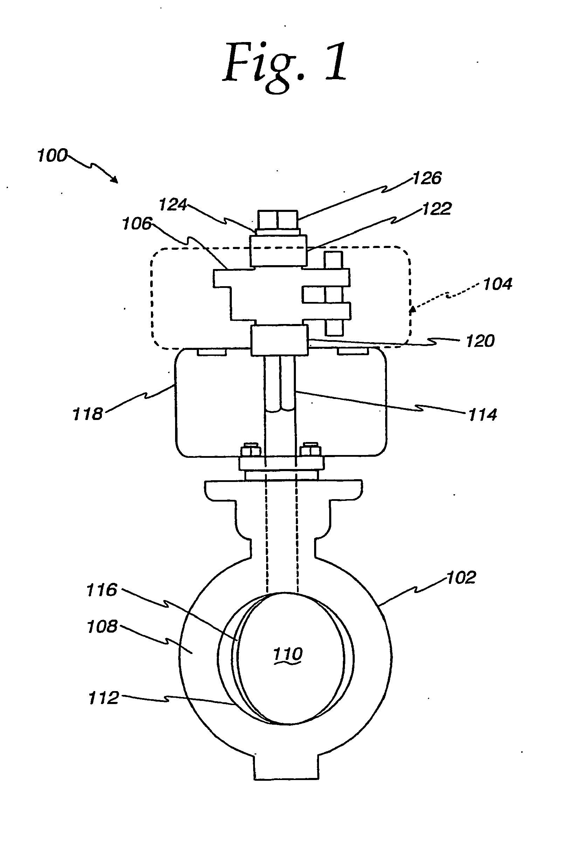

FIG. 1 depicts an example valve assembly 100. The example valve assembly 100 may be used in a process control system to control, for example, temperature, pressure, or flow rate. The example valve assembly 100 may be used to open a fluid path, close a fluid path, and/or vary the size of (i.e., throttle) an opening in a fluid path. For example, as a fluid flows through a fluid path including the example valve assembly 100, varying the size of an opening in the example valve assembly 100 causes the flow rate of the fluid in the fluid path to be reduced or increased based on the degree to which the valve assembly is opened or closed.

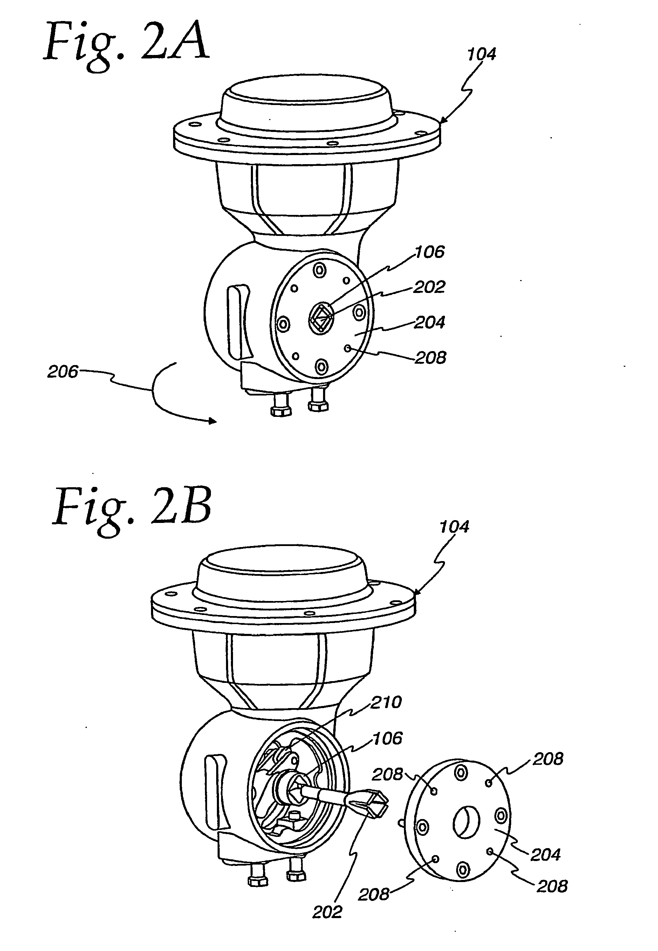

As shown in FIG. 1, the example valve assembly 100 includes a valve 102, an actuator 104, and a lever 106. The lever 106 is mechanically coupled to the actuator 104 as described below in connection with FIGS. 2B through 3B. The actuator 104 is configured to actuate (i.e., rotate, turn, etc.) the lever 106 about its axis to open/close the valve 102.

In general, the lever 106 is adapted to be mechanically coupled to a substantially rectangular or substantially square shaft (e.g., the valve shaft 114 described below). As used herein, the term substantially rectangular includes substantially square geometries. Shaft couplings such as, for example, the example collets described below in connection with FIGS. 2A through 8 may be used to mechanically couple the lever 106 to substantially rectangular shafts (e.g., a substantially square shaft). In contrast to known coupling techniques, the example collets described herein are configured to provide a substantially tight coupling between the lever 106 and a substantially rectangular (e.g., square) shaft without requiring the use of wedges, shaft keys, or the like. In operation, the example collets described herein substantially eliminate lost motion between actuators (e.g., the actuator 104) and process control devices such as the valve 102.

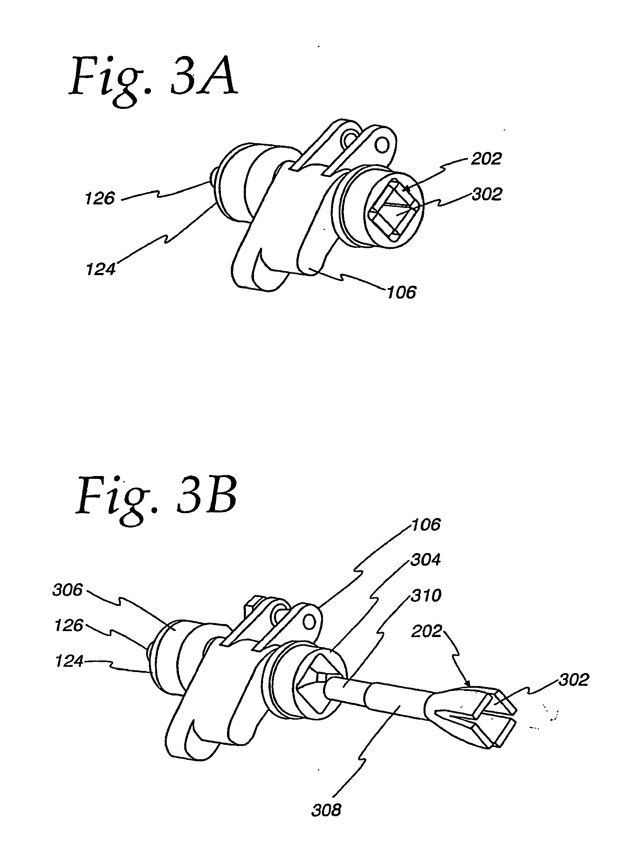

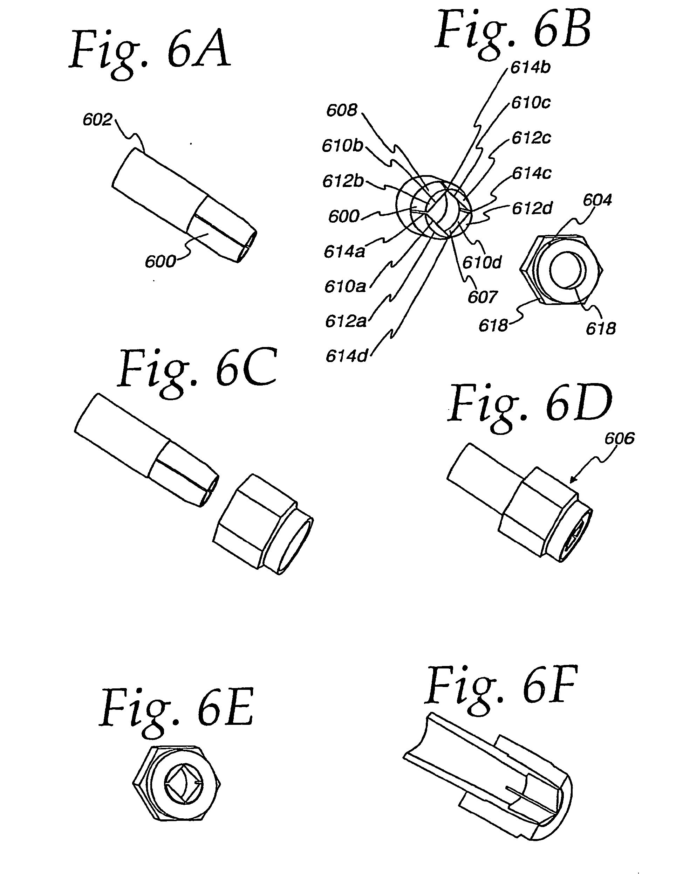

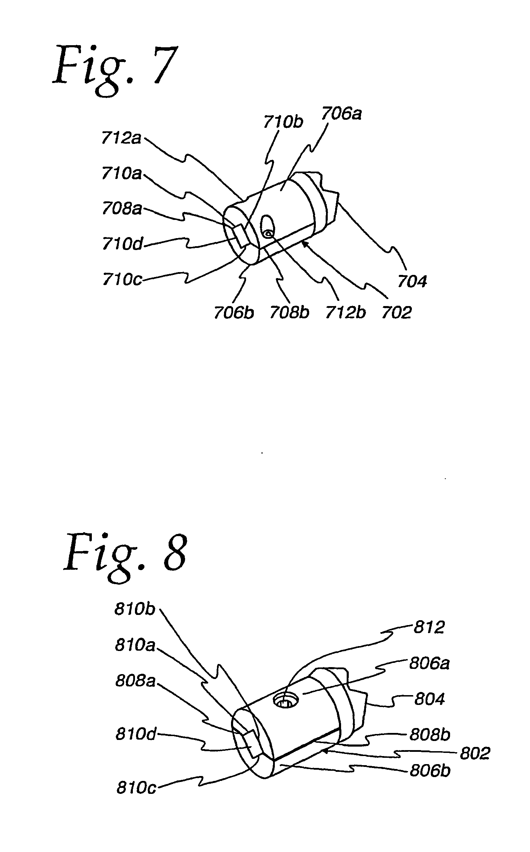

As described in greater detail below, an example collet for use with process control devices may include at least one flexible member having a substantially planar first surface configured to engage a rectangular or square shaft and a second surface configured to engage the surface of a fastening component. The flexible member may be coupled to a first end of an elongated member (e.g., the elongated member 308 described below in connection with FIG. 3B) and displaced toward an axis of the elongated member by the fastening component. The fastening component may include, for example, a sleeve, a nut, a screw, etc. (e.g., the lever 106 described in greater detail below in connection with FIGS. 3A and 3B, the nut 604 described below in connection with FIG. 6, or one or more screws described in connection with FIG. 7 below that pass through the through-holes 712a-b). The example collet and its corresponding fastening component may form a coupling (e.g., the couplings 120 and 122 described below) that applies a clamping force to a shaft to mechanically couple an actuator to a process control device (e.g., the valve 102).

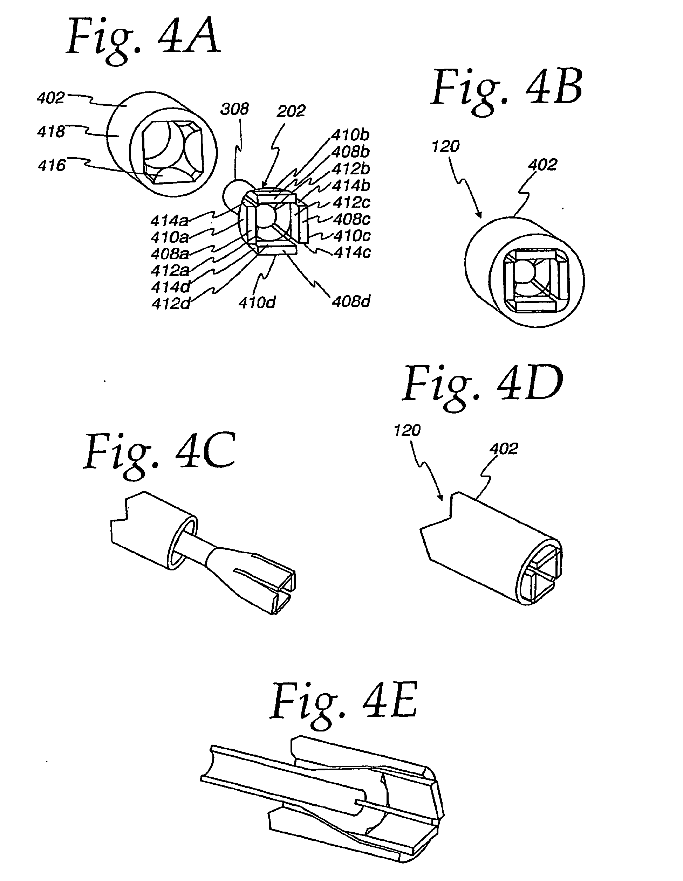

In general, any number of flexible members may be used to implement the example collets described herein. For example, as described below in connection with FIGS. 4A through 4B, the example collet 202 includes four flexible members 408a-b. However, as described below in connection with FIG. 7, the example collet 702 includes two clamping elements or flexible members 706a-b.

Now turning in greater detail to FIG. 1, the valve 102 includes a valve body 108, a valve element 110 (e.g., a disc) positioned within an inner surface or chamber 112 of the valve body 108, and a valve shaft 114 mechanically coupled to the valve element 110 as shown by hidden lines. The valve shaft 114 is shown as a substantially square shaft and may be designed to conform to an ISO standard for square shafts. However, the valve shaft 114 may be implemented using any other shape (e.g., any polygonal shape) and size.

In a closed position, the valve element 110 may be in a seated position in which a sealing surface 116 of the valve element 110 is in contact with the inner surface 112 of the valve body 108, thereby preventing the flow of fluid through the valve body 108. Moving the valve element 110 to a fully open position may involve rotating the valve shaft 114 so that the valve element 110 is in a substantially perpendicular orientation relative to the opening defined by the inner surface 112. Throttling the valve element 110 may involve adjusting and controlling the position of the valve element 110 between a fully open position and a fully closed position to achieve a desired process fluid flow or pressure reduction. In addition, throttling the valve element 110 may be performed in connection with a feedback system that is configured to continually measure the flow and/or pressure of a process fluid. The feedback system may then cause, for example, the actuator 104 to at least partially actuate the lever 106 in response to changes in the flow and/or pressure of the process fluid. In this case, minimizing or reducing lost motion between the lever 106 and the valve shaft 114 is crucial to achieving precise positioning of the valve element 110.

As shown in FIG. 1, the actuator 104 is mechanically coupled to the valve 102 via a mounting bracket 118. The actuator 104 may include any powered or non-powered actuating device that is capable of rotating the valve shaft 114. As is known, actuators are typically implemented using electric, pneumatic, and/or hydraulic device(s). Alternatively, the actuator 104 may be implemented using any non-powered actuating device such as, for example, a hand operated device, etc.

The lever 106 includes a first coupling 120 and a second coupling 122. Although the first coupling 120 is shown as being mechanically coupled to the valve shaft 114, the second coupling 122 may also be configured to be mechanically coupled to the valve shaft 114 as described below. The lever 106 may impart a rotational force to the valve shaft 114 via the first coupling 120 and/or the second coupling 122. For example, as the lever 106 rotates, the first coupling 120 rotates the valve shaft 114 to cause the valve element 110 to move between an open position and a closed position.

The lever 106 engages a washer 124 that is captured between the lever 106 and a draw nut 126. As described in connection with FIGS. 3A and 3B below, the washer 124 and the draw nut 126 enable the first coupling 120 and/or the second coupling 122 to engage (e.g., to be clamped to) the valve shaft 114. Additionally, the couplings 120 and 122 are configured to be substantially similar or identical so that the actuator 104 may be turned one hundred eighty degrees to change a fail-safe operation of the valve 102 as described below in connection with FIGS. 2A and 2B.

FIGS. 2A and 2B are isometric views of the actuator 104 of FIG. 1. FIGS. 2A and 2B generally depict the manner in which the lever 106 of FIG. 1 is rotatably coupled to the actuator 104. As described above in connection with FIG. 1, the actuator 104 may be mechanically coupled to a shaft (e.g., the valve shaft 114 of FIG. 1) to rotate the shaft. Although the actuator 104 is shown as a spring and diaphragm actuator, any other suitable actuating device may be used. The actuator 104 also includes a first faceplate 204, which is shown as a front side of the actuator 104, and a second faceplate (not shown) on the side opposite the first faceplate 204 (i.e., a back side of the actuator 104). The first faceplate 204 and the second faceplate are substantially similar or identical, which enables a field configurable fail-safe operation of the actuator 104 as described below.

The lever 106 is mechanically coupled to or otherwise engages an example collet 202 that is configured to apply a clamping force to, for example, the valve shaft 114 (FIG. 1). The lever 106 and the example collet 202 may form the first coupling 120 (FIG. 1) and/or the second coupling 122 (FIG. 1) as described below in connection with FIGS. 3A and 3B. Additionally, the lever 106 is shown as extending through the first faceplate 204. In a similar manner, the lever 106 extends through the second faceplate and is hidden from view in FIGS. 2A and 2B.

The fail-safe operation of the actuator 104 is field configurable. The fail-safe operation defines whether the valve 102 (FIG. 1) its configured to open or close when power (e.g., electric power, pneumatic power, hydraulic power, etc.) is interrupted. For example, mechanically coupling the first coupling 120 to the valve shaft 114 may provide a fail-safe open configuration. On the other hand, physically turning the actuator 104 as indicated by arrow 206 and mechanically coupling the second coupling 122 to the valve shaft 114 may provide a fail-safe closed configuration.

As shown in FIGS. 2A and 2B, the first faceplate 204 includes a plurality of mounting holes 208 that may be used to mechanically couple the actuator 104 to, for example, the valve 102 (FIG. 1) via the mounting bracket 118 (FIG. 1). In FIG. 2B, the first faceplate 204 is removed from the actuator 104 to expose the lever 106 and the example collet 202. The assembly of the lever 106 and the example collet 202 is described in greater detail below. The lever 106 is mechanically coupled to an actuating element 210, which may be reciprocated or stroked by the actuator 104 and configured to turn or rotate the lever 106 to open/close the valve 102.

FIGS. 3A and 3B are more detailed isometric views of the lever 106 and the example collet 202 of FIGS. 2A and 2B. In particular, FIG. 3A shows the lever 106 and the example collet 202 in an assembled configuration and FIG. 3B is an exploded isometric view of the lever 106 and the collet 202. In an assembled configuration, the lever 106 and the example collet 202 form a coupling such as, for example, the couplings 120 and/or 122 of FIG. 1. The example collet 202 is shown as having a square bore 302 which is depicted in an engaged or clamped configuration in FIG. 3A and an open configuration in FIG. 3B. The lever 106 and the example collet 202 may be manufactured using any material suitable for engaging and rotating (i.e., actuating) a valve shaft such as, for example, the valve shaft 114 of FIG. 1. Additionally, the lever 106 and the example collet 202 may be manufactured using any suitable manufacturing technique such as, for example, die casting, forging, etc.

The square bore 302 may be configured to receive and engage or clamp rectangular or square shafts such as, for example, the valve shaft 114 of FIG. 1. Additionally, the square bore 302 may be configured to engage square shafts that comply with an ISO standard for square shafts. However, the square bore 302 may be implemented using any desired shape and size and may be configured to engage any shaft having a substantially similar shape and size. In general, the shape and size of the bore 302 may be configured to be substantially complementary to the shape and size of a corresponding shaft. For example, if the lever 106 and the example collet 202 are used to implement the couplings 120 and 122 of FIG. 1, the dimensions of the bore 302 may be substantially similar or identical to the dimensions of the valve shaft 114.

As shown in FIG. 3B, a first end of the lever 106 forms the first coupling 120 and provides a first sleeve 304 that is configured to receive and engage the example collet 202. In a similar manner, a second end of the lever 106 forms the second coupling 122 and provides a second sleeve 306 through which the example collet 202 may be inserted. The example collet 202 may be drawn into the lever 106 so that the first sleeve or the second sleeve engages the example collet 202. As described in greater detail below, as the example collet 202 is engaged by one of the sleeves 304 and 306, the dimensions of the bore 302 are reduced, which causes the example collet 202 to engage and apply a clamping force to, for example, the valve shaft 114.

The example collet 202 may be drawn within the lever 106 using a drawing or pulling technique. For example, the lever 106 may include a passage (not shown) extending therethrough and the example collet 202 may include an elongated member 308 that may be placed within the passage. The elongated member 308 may have a threaded portion 306 that may extend through the lever 106 and the washer 124 to threadingly engage the draw nut 126. Tightening the draw nut 126 pulls the example collet 202 into the coupling 120, which causes the dimensions of the square bore 302 to decrease. In this, manner, the example collet 202 may directly engage, for example, the valve shaft 114, thus reducing and/or eliminating the gap between the surfaces of the square bore 302 and the surfaces of the valve shaft 114. In an alternative configuration, the elongated member 308 may include inner threads (not shown) and a draw bolt (instead of the draw nut 126) that may engage the inner threads to draw the example collet 202 into the lever 106.

Lost rotational motion (i.e., lost motion) between the lever 106 and the valve shaft 114 are substantially reduced or eliminated by eliminating gaps between the surfaces of the square bore 302 and the valve shaft 114 via the example collet 202. In addition, the example collets described herein (e.g., the example collet 202) may facilitate the coupling and de-coupling of actuators (e.g., the actuator 104) and shafts (e.g., the valve shaft 114) for purposes of, for example, installation processes, repair processes, etc.

FIGS. 4A through 4E are more detailed views depicting the example collet 202 of FIGS. 1 through 3B. In particular, FIG. 4A shows an exploded isometric view of the example collet 202 and a sleeve 402 (i.e., fastening component), which may be mechanically coupled or integrally formed with the lever 106. The sleeve 402 may be substantially similar or identical to the first sleeve 304 and/or the second sleeve 306 of FIG. 3B. Additionally, the sleeve 402 may form a first end and/or a second end of the lever 106 corresponding to the first coupling 120 and the second coupling 122 (FIG. 1), respectively. The elongated member 308 may be integrally formed with the example collet 202. The example collet 202 may be assembled with the lever 106 as shown in FIGS. 4B, 4C, and 4D to form the first coupling 120 and/or the second coupling 122 of FIG. 1. The example collet 202 may be configured to directly engage a shaft such as, for example, the valve shaft 114 (FIG. 1).

As shown in FIG. 4A, the example collet 202 is formed by a plurality of flexible members 408a-d having a plurality of outer surfaces 410a-d and a plurality of substantially planar inner clamping surfaces 412a-d. The plurality of flexible members 408a-d may be formed by cutting four slits 414a-d. Each of the flexible members 408a-d provides a corresponding one of the inner clamping surfaces 412a-d. In this example, the inner clamping surfaces 412a-d form a substantially rectangular or square bore configured to receive a substantially square shaft (e.g., the valve shaft 114 of FIG. 1). The flexible members 408a-d may be flexed or displaced toward the axis of the elongated member 308. In this manner, when the collet 202 is drawn into the sleeve 402, the flexible members 408a-d are displaced toward and directly engage, for example, the valve shaft 114 (FIG. 1).

The sleeve 402 has an inner surface 416 and an outer surface 418 and may be configured to receive the example collet 202 as shown in FIGS. 4C and 4D to form the first coupling 120 (FIG. 1) or the second coupling 122 (FIG. 1). In particular, when the sleeve 402 receives the example collet 202 (i.e., the collet 202 is drawn into the sleeve 402), the inner surface 416 may directly engage the plurality of outer surfaces 410 of the example collet 202 as shown in FIGS. 4B, 4D, and 4E.

As described above in connection with FIGS. 3A and 3B, the washer 124 and the draw nut 126 may be used to draw or pull the example collet 202 toward and/or within the sleeve 402. As a result, the inner surface 416 engages the plurality of outer surfaces 410 causing the flexible members 408a-d to be flexed or driven toward the axis of the elongated member 308. In this manner, when a shaft (e.g., the valve shaft 114 of FIG. 1) is positioned within the first coupling 120 (or the second coupling 122), the inner clamping surfaces 412a-d directly engage and apply a clamping force to the shaft so that a substantially tight fit is achieved between the plurality of inner clamping surfaces 412a-d and one or more surfaces of the shaft.

Over time and through the continuous operation of a valve (e.g., the valve 102 of FIG. 1), the surfaces of the valve shaft 114 may wear. This may cause loosening of the initial coupling between a shaft and an actuator. However, with the collets described herein such as, for example, the example collet 202, a substantially tight fit or coupling between an actuator (e.g., the actuator 104 of FIG. 1) and process control device shaft (e.g., the shaft 114) may be maintained or easily restored by tightening the draw nut 126 or bolt to draw the example collet 202 further within the sleeve 402 and further displace the flexible members 408a-d toward the shaft.

Although the example collet 202 is shown as having the four flexible members 408a-d, it is possible to implement the example collet 202 using fewer or more flexible members. For example, the example collet 202 may be implemented using a single flexible member that applies a force to one of the surfaces of the valve shaft 114. In that case, one or more of the remaining surfaces of the valve shaft 114 may be directly engaged by the inner surface 416 of the sleeve 402.

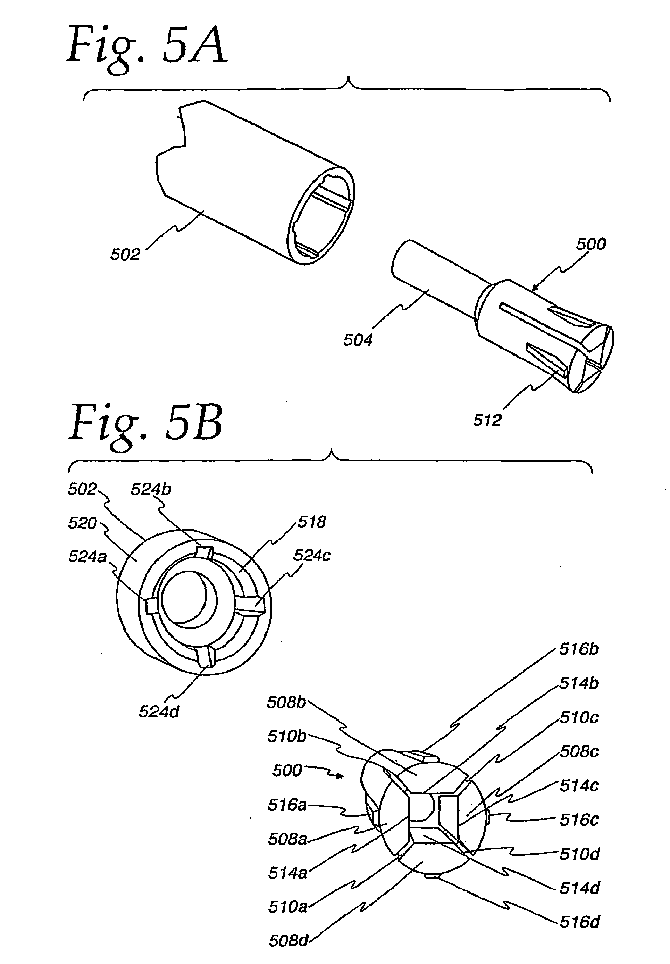

The lever 106, the example collet 202, and the sleeve 402 or fastening component are exemplary depictions and may be implemented by any suitable lever, shaft clamp, and fastening component configured to provide direct engagement of a shaft and minimal or substantially zero lost motion between the shaft and the lever. Further examples of collets for use with process control devices are described below in connection with FIGS. 5A through 8.

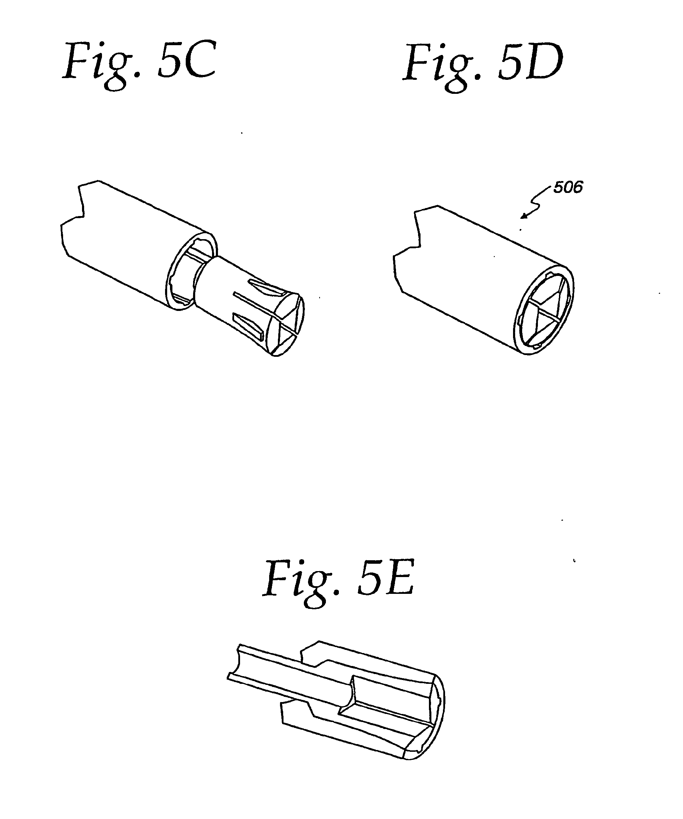

FIGS. 5A through 5E are isometric views depicting another example collet 500. In particular, FIG. 5A shows an exploded isometric view of the example collet 500 and a sleeve 502 (i.e., a fastening component), which may be mechanically coupled or integrally formed with the lever 106 of FIG. 1. The example collet 500 is integrally formed with an elongated member 504 that may inserted into the sleeve 502 and used to draw the example collet 500 within the sleeve 502 as described above. In this manner, the example collet 500 and the sleeve 502 may be assembled as shown in FIGS. 5C, 5D, and 5E to form the example coupling 506. The example coupling 506 may be used to implement the first coupling 120 and/or the second coupling 122 of FIG. 1. The example collet 500 may be configured to directly engage a shaft such as, for example, the valve shaft 114 (FIG. 1).

As shown in FIG. 5B, the example collet 500 is divided into a plurality of flexible members 508a-d that may be formed by cutting slits 510a-d. The outer surfaces of the plurality of flexible members 508a-d form a tapered outer surface 512. Each of the flexible members 508a-d includes a corresponding one of a plurality of substantially planar inner clamping surfaces 514a-d. In this example, the inner clamping surfaces 514a-d form a substantially rectangular or square bore and are configured to directly engage a substantially rectangular or square shaft (e.g., the valve shaft 114 of FIG. 1). The flexible members 508a-d may be flexed so that the inner clamping surfaces 514a-d directly engage, for example, the valve shaft 114.
The outer surfaces of the flexible members 508a-d that form the tapered outer surface 512 each include a corresponding one of a plurality of alignment elements 516a-d that are used to align and hold the example collet 500 within the sleeve 502 as described below.

The sleeve 502 has an inner surface 518 and an outer surface 520 and may receive the example collet 500 as shown in FIGS. 5C and 5D. More specifically, the inner surface 518 may be configured to directly engage the tapered outer surface 512 of the example collet 500 as shown in FIGS. 5D and 5E. The inner surface 518 of the sleeve 502 includes a plurality of alignment grooves 524a-d that are configured to engage the alignment elements 516a-d. As the sleeve 502 receives the example collet 500, the flexible members 508a-d are flexed or driven toward the longitudinal axis of the example collet 500. In this manner, when a shaft (e.g., the valve shaft 114 of FIG. 1) is positioned within the example collet 500, the inner clamping surfaces 514a-d directly engage the shaft.

The elongated member 504 may include a threaded portion (not shown) that is substantially similar or identical to the threaded portion 306 of FIG. 3B and/or an inner threaded portion. The example collet 500 may be drawn within the sleeve 502 using a draw nut (e.g., the draw nut 126 of FIG. 1) as described above in connection with FIGS 3A and 3B. Alternatively, as described above, a draw bolt may be used to draw the example collet 500 within the sleeve 502 in the case where the elongated member 504 has an inner threaded portion.

FIGS. 6A through 6F are isometric views depicting yet another example collet 600. In particular, FIG. 6A shows an isometric view of an elongated member or shaft 602 that is integrally formed with the example collet 600 and FIG. 6B shows another isometric view of the example collet 600 and a nut 604 (i.e., a sleeve or a fastening component). The example collet 600 and the nut 604 may be assembled to form the example coupling 606 (FIG. 6D), which may be used to implement the first coupling 120 and/or the second coupling 122 of FIG. 1. The elongated member 602 may be mechanically coupled or integrally formed with the lever 106 of FIGS. 1 through 3B. The collet 600 includes a substantially rectangular or square bore 607 that is configured to receive a rectangular or a square shaft (e.g., the valve shaft 114 of FIG. 1). As described in greater detail below, the nut 604 may slide over the example collet 600 and cause the bore 607 to directly engage a shaft (e.g., the valve shaft 114). The lever 106 may include collets at both ends that are substantially similar or identical to the collet 600.

As shown in FIG. 6B, the example collet 600 has a tapered outer surface 608 and a plurality of substantially planar inner clamping surfaces 610a-d that forms the bore 607. The example collet 600 includes a plurality of flexible members 612a-d that may be formed by cutting slits 614a-d. Each of the flexible members 612a-d includes a corresponding one of the inner clamping surfaces 610a-d. In this example, the inner clamping surfaces 610a-d are configured to directly engage a square shaft (e.g., the valve shaft 114 of FIG. 1). Additionally, the outer surfaces of the flexible members 612a-d form the tapered outer surface 608. The flexible members 612a-d may be displaced to enable the inner clamping surfaces 610a-d to directly engage the valve shaft 114.

The nut 604 has an inner surface 616 and an outer surface 618 and may function as a sleeve or fastening component that slides over the example collet 600 as shown in FIGS. 6C and 6D to form the example coupling 606. More specifically, the inner surface 616 may be configured to directly engage the tapered outer surface 608 of the collet 600 as shown in FIGS. 6E and 6F. As the nut 604 slides over the example collet 600, the flexible members 612a-d are flexed or driven towards the longitudinal axis of the elongated member 602. In this manner, when a shaft (e.g., the valve shaft 114 of FIG. 1) is received within the bore 607, the inner clamping surfaces 610a-d may directly engage the shaft.

The nut 604 may be fastened or tightened onto the example collet 600 via threads and/or friction. In particular, threads may be formed on the tapered outer surface 608 of the example collet 600 to engage threads formed on the inner surface 616 of the nut 604. The nut 604 may be screwed onto the example collet 600 to cause the flexible members 612a-d to be displaced toward the axis of the elongated member 602. In this manner, a substantially tight fit is achieved between the plurality of inner clamping surfaces 610a-d and one or more surfaces of a shaft (e.g., the valve shaft 114 of FIG. 1).

FIG. 7 is an isometric view of another example collet 702. The example collet 702 is integrally formed with an elongated member 704. The elongated member 704 may be mechanically coupled or integrally formed with the lever 106 of FIGS. 1 through 3B. Additionally, the example collet 702 may be used to implement the example couplings 120 and 122 of FIG. 1. As described in greater detail below, the example collet 702 may be configured to directly engage a shaft such as, for example, the valve shaft 114 (FIG. 1). In particular, the example collet 702 includes a first clamping element or flexible member 706a and a second clamping element or flexible member 706b, both of which may be formed by forming or cutting a first slit 708a and a second slit 708b. The first flexible member 706a includes two substantially planar inner clamping surfaces 710a and 710b and the second flexible member 706b includes two substantially planar inner clamping surfaces 710c and 710d, all of which form a substantially rectangular or square bore for receiving a substantially rectangular or square shaft (e.g., the valve shaft 114 of FIG. 1).

The first clamping element 706a includes a first through-hole 712a and a second through-hole 712b. The second clamping element 706b includes a first threaded hole (not shown) that aligns with the first through-hole 712a and a second threaded hole (not shown) that aligns with the second through-hole 712b. A first screw (not shown) may be inserted into the first through-hole 712a and screwed into the first threaded hole. In a similar manner, a second screw may be placed within the second through-hole 712b and screwed into the second threaded hole. As the screws are threaded into the screw holes, a bottom surface of each screw head (not shown) directly engages an outer surface of the first clamping element 706a to cause the clamping elements 706a-b to be displaced, flexed, or driven toward the axis of the elongated member 704. In this manner, the first clamping element 706a and the second clamping element 706b are drawn toward one another. When a shaft (e.g., the valve shaft 114) is positioned within the collet 702, the clamping surfaces 710a-d achieve a substantially tight fit between the plurality of clamping surfaces 710a-d and one or more surfaces of the shaft.

FIG. 8 is an isometric view of yet another example collet 802. The example collet 802 is substantially similar to the example collet 702 of FIG. 7 and is integrally formed with an elongated member 804. The elongated member 804 may be mechanically coupled or integrally formed with the lever 106 of FIGS. 1 through 3B. Additionally, the example collet 802 may be used to implement the example couplings 120 and 122 of FIG. 1. The collet 802 is formed by a first clamping element or flexible member 806a and a second clamping element or flexible member 806b, both of which may be formed by forming or cutting a first slit 808a and a second slit 808b. The first clamping element 806a includes two substantially planar inner clamping surfaces 810a and 810b and the second clamping element 806b includes two substantially planar inner clamping surfaces 810c and 810d, all of which form a substantially rectangular or square bore for receiving a substantially rectangular or square shaft (e.g., the valve shaft 114 of FIG. 1).

The example collet 802 differs from the example collet 702 in that one through-hole 812 is formed through the first flexible member 806a and a threaded hole (not shown) is formed opposite the through-hole 812 through the second clamping element 806b. In this manner, when a screw is put through the through-hole 812 and screwed into the threaded hole, the clamping elements 806a-b are drawn toward one another, to cause the inner clamping surfaces 810a-d to engage one or more surfaces of a shaft as described above.

The example collets 702 and 802 are shown as having two slits (e.g., the slits 708a-b and 808a-b) that define a first clamping element (e.g., the clamping elements 706a and 806a) and a second clamping element (e.g., the clamping elements 706b and 806b). However, a collet similar to the example collets 702 and 802 may be implemented using one slit. For example, by eliminating the slit 708a, the through-hole 712a and the corresponding threaded hole from the example collet 702, a C-shaped flexible member may be formed that includes the slit 708b, the through-hole 712b, the corresponding threaded hole, and the substantially planar inner clamping surfaces 710a-d. A screw may then be used in connection with the through-hole 712b and the threaded hole to reduce the dimensions of the substantially rectangular or square bore formed by the inner clamping surfaces 710a-d. In this manner, the inner clamping surfaces 710a-d may apply a clamping force to one or more of the surfaces of, for example, the valve shaft 114 (FIG. 1).

Although certain methods, apparatus, and articles of manufacture have been described herein, the scope of coverage of this patent is not limited thereto. To the contrary, this patent covers all methods, apparatus, and articles of manufacture falling within the scope of the appended claims.

## Claims

1. A collet for use with a process control device, the collet (202) comprising:
at least one flexible member having a first surface (302) configured to engage a rectangular shaft and a second surface configured to engage a third surface of a first substantially rectangular bore, wherein the at least one flexible member is coupled to a first end of an elongated member (308) and configured to be displaced toward an axis of the elongated member (308) by the third surface, and wherein the elongated member (308) is configured to be coupled to at least a portion of a process control device actuator.

2. A collet according to claim 1, **characterized by** at least two flexible members, whereby the first surface of one flexible member opposing the first surface of the at least one other flexible member, whereby the at least one flexible member and the at least another flexible member are configured to accept the rectangular shaft therebetween, and wherein the at least one flexible member and the at least another flexible member are configured to be displaced toward one another when the second surface engages the third surface.

3. A collet according to any one of the preceding claims, **characterized in that** the elongated member (308) is integrally formed with the at least the portion of the process control device actuator.

4. A collet according to any one of the preceding claims, **characterized in that** the third surface is associated with at least one of a coupling, a sleeve, a nut, and a screw.

5. A collet according to any one of the preceding claims, **characterized in that** the third surface comprises a tapered portion.

6. A collet according to any one of the preceding claims, **characterized in that** the second surface of the at least one flexible member comprises a tapered portion.

7. A collet according to any one of the preceding claims, **characterized by** a plurality of flexible members, wherein the plurality of flexible members are configured to form a substantially rectangular opening that is configured to receive the rectangular shaft.

8. A collet according to claim 7, **characterized in that** the second surfaces define a substantially rectangular outer surface.

9. A collet according to any one of the preceding claims, **characterized in that** a second end of the elongated member (308) is configured to engage at least one of a nut and one of a bolt.

10. A collet according to any one of the preceding claims, **characterized by** a plurality of flexible members, whereby the first surfaces (302) form at least a portion of a second substantially rectangular bore configured to receive the rectangular shaft, wherein the second surfaces form an outer surface for engaging a surface of the first bore having a plurality of alignment grooves.

11. A collet according to claim 10, **characterized in that** the plurality of flexible members and the elongated member (308) are integrally formed.

12. A collet according to claim 10, **characterized in that** the plurality of flexible members is configured to be mechanically coupled to a lever associated with the process control device actuator.

13. A collet according to any one of the preceding claims, **characterized in that** the elongated member (308) is configured to be mechanically coupled to a lever.

14. A collet according to any one of the preceding claims, **characterized in that** the elongated member (308) is integrally formed with a lever.

15. A collet according to any one of the preceding claims, **characterized in that** the least one flexible member is configured to apply an actuating force to the rectangular shaft.

16. A collet according to any one of the preceding claims, **characterized in that** the elongated member (308) includes a threaded portion configured to engage at least one of a nut and a bolt.

17. A collet according to claim 10, wherein the outer surface includes a plurality of alignment elements configured to engage the plurality of alignment grooves.

18. A coupling with a collet (202) according to any one of the preceding claims, the coupling comprising:
- a sleeve having a passage extending therethrough and
- the first substantially rectangular bore (304) coaxial with the passage and extending at least partially along the passage;
whereby the elongate member (304) is configured to extend into the passage and the collet (202) engages with the substantially rectangular bore,
whereby the flexible members are configured to reduce the length of a substantially rectangular perimeter defined by the first surfaces as the second surfaces engage the first substantially rectangular bore.

19. A coupling according to claim 18, **characterized in that** the sleeve is integrally formed with a lever that is configured to be rotatably coupled to the process control device actuator.

20. A coupling according to claim 19, **characterized in that** the process control device actuator is at least one of an electric actuator, a pneumatic actuator, a hydraulic actuator, and a manually operated actuator.

21. A coupling according to claim 18, **characterized in that** the rectangular shaft is associated with a valve.

22. A coupling according to claim 18, **characterized in that** the sleeve comprises a nut.

23. A coupling according to claim 18, **characterized in that** the sleeve is integrally formed with at least a portion of the process control device actuator.

## Patentansprüche

1. Zwinge zum Gebrauch mit einer Prozess-Steuerungseinrichtung, wobei die Zwinge (202) Folgendes aufweist:
wenigstens ein flexibles Teil, das eine erste Oberfläche (302), die zum Eingriff mit einer Rechteckwelle ausgebildet ist, und eine zweite Oberfläche hat, die zum Eingriff mit einer dritten Oberfläche einer im wesentlichen rechteckigen Bohrung hat, wobei das wenigstens eine flexible Teil mit dem ersten Ende eines langgestreckten Teils (308) gekoppelt und ausgebildet ist, um von der dritten Oberfläche zu einer Achse des langgestreckten Teils (308) hin verlagert zu werden, und wobei das langgestreckte Teil (308) ausgebildet ist, um mit wenigstens einem Bereich eines Aktors einer Prozess-Steuerungseinrichtung gekoppelt zu werden.

2. Zwinge nach Anspruch 1, **gekennzeichnet durch** wenigstens zwei flexible Teile,
wobei die erste Oberfläche des einen flexiblen Teils der ersten Oberfläche des wenigstens einen anderen flexiblen Teils gegenüberliegt, wobei das wenigstens eine flexible Teil und das wenigstens eine weitere flexible Teil zur Aufnahme der Rechteckwelle zwischen sich ausgebildet sind, und wobei das wenigstens eine flexible Teil und das wenigstens eine weitere flexible Teil ausgebildet sind, um zu einander hin verlagert zu werden, wenn die zweite Oberfläche mit der dritten Oberfläche in Eingriff gelangt.

3. Zwinge nach einem der vorhergehenden Ansprüche, **dadurch gekennzeichnet, dass** das langgestreckte Teil (308) mit dem wenigstens einen Bereich des Aktors der Prozess-Steuerungseinrichtung integral ausgebildet ist.

4. Zwinge nach einem der vorhergehenden Ansprüche, **dadurch gekennzeichnet, dass** die dritte Oberfläche wenigstens einer von einer Kupplung, einer Buchse, einer Mutter und einer Schraube zugeordnet ist.

5. Zwinge nach einem der vorhergehenden Ansprüche, **dadurch gekennzeichnet, dass** die dritte Oberfläche einen verjüngten Bereich aufweist.

6. Zwinge nach einem der vorhergehenden Ansprüche, **dadurch gekennzeichnet, dass** die zweite Oberfläche des wenigstens einen flexiblen Teils einen verjüngten Bereich aufweist.

7. Zwinge nach einem der vorhergehenden Ansprüche, **gekennzeichnet durch** eine Vielzahl von flexiblen Teilen, wobei die Vielzahl von flexiblen Teilen ausgebildet istd, um eine im wesentlichen rechteckige Öffnung zu bilden, die zur Aufnahme der Rechteckwelle ausgebildet ist.

8. Zwinge nach Anspruch 7, **dadurch gekennzeichnet, dass** die zweiten Oberflächen eine im wesentlichen rechteckige äußere Oberfläche bilden.

9. Zwinge nach einem der vorhergehenden Ansprüche, **dadurch gekennzeichnet**, das ein zweites Ende des langgestreckten Teils (308) zum Eingriff mit wenigstens einer Mutter und einem Bolzen ausgebildet ist.

10. Zwinge nach einem der vorhergehenden Ansprüche, **gekennzeichnet durch** eine Vielzahl von flexiblen Teilen, wobei die ersten Oberflächen (302) wenigstens einen Bereich einer zweiten im wesentlichen rechteckigen Bohrung bilden, die zur Aufnahme der Rechteckwelle ausgebildet ist, wobei die zweiten Oberflächen eine äußere Oberfläche zum Eingriff mit einer Oberfläche der ersten Bohrung, die eine Vielzahl von Ausfluchtungsnuten hat, bilden.

11. Zwinge nach Anspruch 10, **dadurch gekennzeichnet, dass** die Vielzahl von flexiblen Teilen und das langgestreckte Teil (308) integral ausgebildet sind.

12. Zwinge nach Anspruch 10, **dadurch gekennzeichnet, dass** die Vielzahl von flexiblen Teilen ausgebildet sind, um mechanisch mit einem dem Aktor der Prozess-Steuerungseinrichtung zugehörigen Hebel gekoppelt zu werden.

13. Zwinge nach einem der vorhergehenden Ansprüche, **dadurch gekennzeichnet, dass** das langgestreckte Teil (308) zur mechanischen Kopplung mit einem Hebel ausgebildet ist.

14. Zwinge nach einem der vorhergehenden Ansprüche, **dadurch gekennzeichnet, dass** das langgestreckte Teil (308) integral mit einem Hebel ausgebildet ist.

15. Zwinge nach einem der vorhergehenden Ansprüche, **dadurch gekennzeichnet, dass** das wenigstens eine flexible Teil ausgebildet ist, um eine Betätigungskraft auf die Rechteckwelle aufzubringen.

16. Zwinge nach einem der vorhergehenden Ansprüche, **dadurch gekennzeichnet, dass** das langgestreckte Teil (308) einen Gewindebereich aufweist, der zum Eingriff mit wenigstens einem von einer Mutter und einem Bolzen ausgebildet ist.

17. Zwinge nach Anspruch 10, wobei die äußere Oberfläche eine Vielzahl von Ausfluchtungselementen aufweist, die zum Eingriff mit der Vielzahl von Ausfluchtungsnuten ausgebildet sind.

18. Kupplung mit einer Zwinge (202) nach einem der vorhergehenden Ansprüche,
wobei die Kupplung Folgendes aufweist:
- eine Hülse mit einem sie durchsetzenden Durchgang und
- die erste im wesentlichen rechteckige Bohrung (304), die mit dem Durchgang koaxial ist und sich wenigstens teilweise entlang dem Durchgang erstreckt;
wobei das langgestreckte Teil (304) so ausgebildet ist, dass es sich in den Durchgang erstreckt, und die Zwinge (202) mit der im wesentlichen rechteckigen Bohrung in Eingriff ist;
wobei die flexiblen Teile so ausgebildet sind, dass sie die Länge eines von den ersten Oberflächen definierten, im wesentlichen rechteckigen Umfangs verringern, wenn die zweiten Oberflächen mit der ersten im wesentlichen rechteckigen Bohrung in Eingriff gelangen.

19. Kupplung nach Anspruch 18, **dadurch gekennzeichnet, dass** die Buchse integral mit einem Hebel ausgebildet ist, der zur Drehverbindung mit dem Aktor der Prozess-Steuerungseinrichtung ausgebildet ist.

20. Kupplung nach Anspruch 19, **dadurch gekennzeichnet, dass** der Aktor der Prozess-Steuerungseinrichtung wenigstens einer von einem elektrischen Aktor, einem pneumatischen Aktor, einem hydraulischen Aktor und einem handbetätigten Aktor ist.

21. Kupplung nach Anspruch 18, **dadurch gekennzeichnet, dass** die Rechteckwelle einem Ventil zugeordnet ist.

22. Kupplung nach Anspruch 18, **dadurch gekennzeichnet, dass** die Buchse eine Mutter aufweist.

23. Kupplung nach Anspruch 18, **dadurch gekennzeichnet, dass** die Buchse mit wenigstens einem Bereich des Aktors der Prozess-Steuerungseinrichtung integral ausgebildet ist.

## Revendications

1. Bague utilisée avec un dispositif de commande de processus, la bague (202) comprenant :
au moins un élément souple ayant une première surface (302) configurée pour coopérer avec un arbre rectangulaire et une deuxième surface conçue pour coopérer avec une troisième surface d'un alésage sensiblement rectangulaire, au moins un élément souple étant couplé à une première extrémité d'un élément allongé (308) et conçu pour être déplacé vers un axe de l'élément allongé (308) par la troisième surface, et dans lequel l'élément allongé (308) étant conçu pour être couplé à au moins une partie d'un actionneur de dispositif de commande de processus.

2. Bague selon la revendication 1, **caractérisée en ce qu'**au moins deux éléments souples, tels que la première surface d'un élément souple est opposée à la première surface d'au moins un autre élément souple, de sorte que le au moins un élément souple et le au moins un autre élément souple sont configurés pour accepter l'arbre rectangulaire entre eux, et dans lequel le au moins un élément souple et le au moins un autre élément souple sont configurés pour être déplacés vers un autre lorsque la deuxième surface coopère avec la troisième surface.

3. Bague selon l'une quelconque des revendications précédentes, **caractérisée en ce que** l'élément allongé (308) est formé d'un seul tenant avec au moins la partie d'actionneur de dispositif de commande de processus.

4. Bague selon l'une quelconque des revendications précédentes, **caractérisée en ce que** la troisième surface est associée avec au moins un(e) parmi un raccord, un manchon, un écrou et une vis.

5. Bague selon l'une quelconque des revendications précédentes, **caractérisée en ce que** la troisième surface comprend une partie conique.

6. Bague selon l'une quelconque des revendications précédentes, **caractérisée en ce que** la deuxième surface du au moins un élément souple comprend une partie conique.

7. Bague selon l'une quelconque des revendications précédentes, **caractérisée par** une pluralité d'éléments souples, la pluralité d'éléments souples étant configurés pour former une ouverture sensiblement rectangulaire qui est configurée pour recevoir l'arbre rectangulaire.

8. Bague selon la revendication 7, **caractérisée en ce que** les deuxièmes surfaces définissent une surface extérieure sensiblement rectangulaire.

9. Bague selon l'une quelconque des revendications précédentes, **caractérisée en ce qu'**une deuxième extrémité de l'élément allongé (308) est configurée pour coopérer avec au moins un écrou et au moins un boulon.

10. Bague selon l'une quelconque des revendications précédentes, **caractérisée par** une pluralité d'éléments souples, les premières surfaces (302) formant au moins une partie d'un deuxième arbre sensiblement rectangulaire configurée pour recevoir l'arbre rectangulaire, les deuxièmes surfaces formant une surface extérieure pour coopérer avec une surface du premier alésage ayant une pluralité de rainures d'alignement.

11. Bague selon la revendication 10, **caractérisée en ce que** la pluralité d'éléments souples et l'élément allongé (308) sont formés d'un seul tenant.

12. Bague selon la revendication 10, **caractérisée en ce que** la pluralité d'éléments souples sont configurés pour être couplés mécaniquement à un levier associé à l'actionneur de dispositif de commande de processus.

13. Bague selon l'une quelconque des revendications précédentes, **caractérisée en ce que** l'élément allongé (308) est configuré pour être couplé mécaniquement à un levier.

14. Bague selon l'une quelconque des revendications précédentes, **caractérisée en ce que** l'élément allongé (308) est formé d'un seul tenant avec un levier.

15. Bague selon l'une quelconque des revendications précédentes, **caractérisée en ce que** le au moins un élément souple est configuré pour appliquer une force d'actionnement à l'arbre rectangulaire.

16. Bague selon l'une quelconque des revendications précédentes, **caractérisée en ce que** l'élément allongé (308) comprend une partie filetée configurée pour coopérer avec au moins un parmi un écrou et un boulon.

17. Bague selon la revendication 10, dans lequel la surface extérieure comprend une pluralité d'éléments allongés configurés pour coopérer avec la pluralité de rainures d'alignement.

18. Raccord ayant une bague (202) selon l'une quelconque des revendications précédentes, le raccord comprenant :
- un manchon ayant un passage s'étendant à travers celui-ci et
- le premier alésage sensiblement rectangulaire (304) coaxial avec le passage et s'étendant à au moins partiellement le long du passage ;
de sorte que l'élément allongé (304) est configuré pour s'étendre dans le passage et la bague (202) coopérant avec l'arbre sensiblement rectangulaire,
de sorte que les éléments souples sont configurés pour réduire la longueur d'un périmètre sensiblement rectangulaire défini par les premières surfaces alors que les deuxièmes surfaces coopèrent avec le premier alésage sensiblement rectangulaire.

19. Raccord selon la revendication 18, **caractérisé en ce que** le manchon est formé d'un seul tenant avec un levier qui est configuré pour être couplé de manière rotative à l'actionneur de dispositif de commande de processus.

20. Raccord selon la revendication 19, **caractérisé en ce que** l'actionneur de dispositif de commande de processus est au moins un parmi un actionneur électrique, un actionneur pneumatique, un actionneur hydraulique et un actionneur actionné manuellement.

21. Raccord selon la revendication 18, **caractérisé en ce que** l'arbre rectangulaire est associé à une soupape.

22. Raccord selon la revendication 18, **caractérisé en ce que** le manchon comprend un écrou.

23. Raccord selon la revendication 18, **caractérisé en ce que** le manchon est formé d'un seul tenant avec au moins une partie de l'actionneur de dispositif de commande de processus.
